# EUROPÄISCHE PATENTSCHRIFT

(11) **EP 3 298 860 B1**
(45) Veröffentlichungstag und Bekanntmachung des Hinweises auf die Patenterteilung: **16.10.2019**
(21) Anmeldenummer: 16721012.9
(22) Anmeldetag: 27.04.2016
(51) Int. Cl.: H05B 6/06, H05B 6/12

(54) **GARGESCHIRR**
COOKING UTENSIL
USTENSILE DE CUISSON

(30) Priorität: 21.05.2015 ES 201530699
(43) Veröffentlichungstag der Anmeldung: 28.03.2018
(73) Patentinhaber: BSH Hausgeräte GmbH, 81739 München (DE)
(72) Erfinder: GARCIA MARTINEZ, Jose Andres, 50014 Zaragoza (ES); LLORENTE GIL, Sergio, 50009 Zaragoza (ES); MARZO ALVAREZ, Teresa del Carmen, 50012 Zaragoza (ES); MIR BEL, Jorge, 50019 Zaragoza (ES); RIVERA PEMAN, Julio, 50410 Cuarte de Huerva (Zaragoza) (ES); SANCHO DIAZ, Francisco Javier, 50009 Zaragoza (ES); VILLANUEVA VALERO, Beatriz, 50011 Zaragoza (ES)
(86) Internationale Anmeldenummer: PCT/IB2016/052368
(87) Internationale Veröffentlichungsnummer: WO 2016/185305

(56) Entgegenhaltungen:
- EP-A1- 2 548 636
- EP-A1- 2 757 660
- WO-A1-2014/056785
- ES-A1- 2 393 378
- US-A- 4 038 518
- US-A1- 2006 221 765
- US-A1- 2009 251 113

## Beschreibung

Die Erfindung betrifft ein Gargeschirr nach dem Patentanspruch 1 und ein Kochsystem nach dem Patentanspruch 12.

Aus dem Stand der Technik ist bereits ein Gargeschirr bekannt, welches zu einem Aufstellen auf einer Kochfeldplatte einer Kochfeldvorrichtung zu einer Durchführung eines Heizvorgangs vorgesehen ist. Bei dem Heizvorgang wird das Gargeschirr durch Induktionsheizelemente erhitzt. Die Induktionsheizelemente sind unterhalb einer Kochfeldplatte der Kochfeldvorrichtung angeordnet und zu einem Beheizen des Gargeschirrs vorgesehen. Ein oberhalb der Kochfeldplatte angeordneter Verbraucher muss mittels einer separaten Antriebseinheit und/oder manuell angetrieben werden.

EP 2 757 660 A1 offenbart eine Vorrichtung mit zumindest einer Empfängerspule in einem Gefäß, wobei die Empfängerspule zumindest dazu vorgesehen ist, kontaktlos elektrische Leistung zu empfangen, und mit zumindest einer Übertragungseinheit, welche zumindest dazu vorgesehen ist, kontaktlos elektrische Leistung zu übertragen.

EP 2 583 750 A1 und EP 2 548 636 A1 offenbarten jeweils ein Gargeschirr mit einer Antriebseinheit, die dazu vorgesehen ist, einen Verbraucher anzutreiben. Darüber hinaus umfasst die Vorrichtung jeweils ein magnetisches Kopplungselement, welches zumindest dazu vorgesehen ist, mittels der Antriebseinheit den Verbraucher anzutreiben.

US 2006/221765 A1 offenbart einen magnetisch gekoppelten Mixer. Der Mixer weist zumindest ein erstes Magnet-Array und ein zweites Magnet-Array auf. Die zwischen den Magnet-Arrays auftretende magnetische Kraft wird insbesondere zum Antrieb des Verbrauchers verwendet.

Die Aufgabe der Erfindung besteht insbesondere darin, ein gattungsgemäßes Gargeschirr mit verbesserten Eigenschaften hinsichtlich eines hohen Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird ein Gargeschirr mit einer Antriebseinheit, die dazu vorgesehen ist, zumindest einen Verbraucher anzutreiben, und mit einer Empfangseinheit vorgeschlagen, die zum kontaktlosen Empfang von Energie, insbesondere von elektromagnetischer Energie, und zu einer Energieversorgung der Antriebseinheit vorgesehen ist. Unter einem "Gargeschirr" soll insbesondere eine Einheit verstanden werden, welche insbesondere dazu vorgesehen ist, in wenigstens einem Betriebszustand zumindest ein Lebensmittel aufzunehmen und insbesondere in wenigstens einem Betriebszustand in direktem Kontakt mit dem Lebensmittel zu stehen. Das Lebensmittel könnte beispielsweise ein zu garendes Lebensmittel, insbesondere Gargut, und/oder ein insbesondere mechanisch, vorteilhaft in einer über eine Beheizung hinausgehenden Weise, zu bearbeitendes Lebensmittel sein. Das Gargeschirr ist insbesondere zu einem Aufstellen auf einer Kochfeldplatte zu einer Durchführung eines Heizvorgangs vorgesehen. Eine Kochfeldvorrichtung eines das Gargeschirr aufweisenden Kochsystems weist insbesondere zumindest ein Induktionsheizelement auf, welches insbesondere dazu vorgesehen ist, dem Gargeschirr zu der Durchführung des Heizvorgangs zumindest Energie, insbesondere in Form eines elektromagnetischen Wechselfelds, bereitzustellen und/oder zuzuführen. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere einer Kochfeldvorrichtung und/oder eines eine Kochfeldvorrichtung aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Die Antriebseinheit ist insbesondere dazu vorgesehen, in wenigstens einem Betriebszustand dem Verbraucher zumindest Antriebsenergie zuzuführen, welche die Antriebseinheit insbesondere aus der von der Empfangseinheit empfangenen Energie erzeugt, insbesondere gewinnt und/oder abzweigt und/oder zur Verfügung stellt. Unter einem "Verbraucher" soll insbesondere eine Baueinheit verstanden werden, welche sich insbesondere von einer reinen Flüssigkeit unterscheidet, und welche insbesondere dazu vorgesehen ist, durch die Antriebseinheit wenigstens teilweise in Bewegung versetzt zu werden. Die Empfangseinheit ist insbesondere dazu vorgesehen, in wenigstens einem Betriebszustand, vorteilhaft von zumindest einer Induktionseinheit bereitgestellte, elektromagnetische Energie aufzunehmen. Vorzugsweise ist die Empfangseinheit dazu vorgesehen, mittels der aufgenommenen Energie die Antriebseinheit wenigstens teilweise, insbesondere wenigstens zu einem Großteil und vorteilhaft komplett zu versorgen. Die Empfangseinheit könnte beispielsweise zu einer induktiven Energieübertragung und/oder zu einer kapazitiven Energieübertragung und/oder zu einer elektromagnetischen Energieübertragung und/oder zu einer Energieübertragung mittels Laser und/oder zu einer Energieübertragung mittels Schall vorgesehen sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort erreicht werden. Insbesondere kann eine hohe Flexibilität hinsichtlich einer Aufstellposition des Gargeschirrs und/oder hinsichtlich einer Art der übertragenen Energie ermöglicht werden. Mittels der Antriebseinheit kann insbesondere eine Vielzahl an verschiedenen Verbrauchern versorgt werden.

Ferner wird vorgeschlagen, dass die Empfangseinheit zumindest einen Induktor aufweist. Insbesondere weist die Empfangseinheit zumindest eine Spule auf, welche insbesondere dazu vorgesehen ist, in Abhängigkeit zumindest eines von zumindest einer Induktionseinheit bereitgestellten Magnetfelds, insbesondere eines elektromagnetischen Wechselfelds, magnetisiert zu werden und/oder zumindest einen Induktionsstrom zu erzeugen. Die Empfangseinheit könnte insbesondere zumindest zwei, vorteilhaft zumindest drei, besonders vorteilhaft zumindest fünf und vorzugsweise mehrere Induktoren aufweisen. Dadurch kann insbesondere eine preisgünstige Ausgestaltung erreicht werden. Insbesondere kann eine große Menge an Leistung übertragen werden.

Zudem wird erfindungsgemäß vorgeschlagen, dass die Antriebseinheit dazu vorgesehen ist, zu einem Antrieb des Verbrauchers zumindest ein Magnetfeld bereitzustellen. Insbesondere ist die Antriebseinheit dazu vorgesehen, die von der Empfangseinheit bereitgestellte Energie wenigstens zu einem Großteil in elektromagnetische Energie umzuwandeln. Beispielsweise könnte die Antriebseinheit dazu vorgesehen sein, dem Verbraucher insbesondere direkt die elektromagnetische Energie bereitzustellen und insbesondere den Verbraucher mittels der elektromagnetischen Energie anzutreiben, wie beispielsweise mittels eines Magnetfelds. Alternativ könnte die Antriebseinheit dazu vorgesehen sein, die elektromagnetische Energie in eine weitere Energieform umzuwandeln, wie beispielsweise in mechanische Energie, und dem Verbraucher insbesondere die weitere Energieform bereitzustellen und vorteilhaft den Verbraucher mittels der weiteren Energieform anzutreiben. Dadurch kann insbesondere ein besonders vorteilhafter Antrieb des Verbrauchers erreicht werden. Insbesondere kann eine hohe Effizienz ermöglicht werden.

Weiterhin wird vorgeschlagen, dass die Antriebseinheit zumindest einen Elektromotor aufweist, der dazu vorgesehen ist, den Verbraucher anzutreiben. Die Antriebseinheit weist insbesondere zumindest eine Welle auf. In diesem Fall ist die Welle vorzugsweise dazu vorgesehen, in wenigstens einem montierten Zustand den Elektromotor und den Verbraucher wenigstens im Wesentlichen miteinander zu verbinden. Vorzugsweise ist die Antriebseinheit dazu vorgesehen, den Verbraucher mittels des Elektromotors über die Welle anzutreiben, welche insbesondere durch ein einem Lebensmittelaufnahmeraum zugewandten Innengehäuseteil einer Gargeschirrgehäuseeinheit hindurchgreift. In einem alternativen Ausführungsbeispiel könnte die Antriebseinheit insbesondere zumindest einen Permanentmagnet ausweisen, welcher in wenigstens einem Betriebszustand mit dem Elektromotor durch die Welle verbunden sein könnte. Der Permanentmagnet könnte insbesondere dazu vorgesehen sein, das von der Antriebseinheit bereitgestellte Magnetfeld bereitzustellen und/oder zu erzeugen. Insbesondere könnte die Antriebseinheit dazu vorgesehen sein, den Verbraucher mittels des von dem Permanentmagneten bereitgestellten Magnetfelds anzutreiben. Insbesondere könnte der Permanentmagnet dazu vorgesehen sein, in wenigstens einem Betriebszustand mit zumindest einem Magnetelement des Verbrauchers zu wechselwirken und vorteilhaft diesem Magnetelement das Magnetfeld zu dem Antrieb bereitzustellen. In einem weiteren alternativen Ausführungsbeispiel könnte die Antriebseinheit insbesondere zumindest zwei Elektromagnete ausweisen, welche insbesondere dazu vorgesehen sein könnten, das Magnetfeld zu dem Antrieb des Verbrauchers bereitzustellen. Unter einem "Elektromotor" soll insbesondere eine Baueinheit verstanden werden, welche dazu vorgesehen ist, elektrische Energie in Bewegungsenergie umzuwandeln. Vorteilhaft ist die Antriebseinheit dazu vorgesehen, die elektromagnetische Energie insbesondere innerhalb des Elektromotors bereitzustellen und vorteilhaft wenigstens zu einem Großteil in Bewegungsenergie umzuwandeln und diese Bewegungsenergie vorteilhaft an den Verbraucher zu übertragen. Die Antriebseinheit ist insbesondere dazu vorgesehen, den Verbraucher in Bewegung zu versetzen und/oder in Bewegung zu halten. Insbesondere ist die Bewegung als eine wenigstens im Wesentlichen um eine Drehachse rotierende Rotationsbewegung ausgebildet. Dadurch kann insbesondere auf Standardkomponenten zurückgegriffen werden, wodurch insbesondere geringe Kosten ermöglicht werden können. Insbesondere kann eine hohe Zuverlässigkeit erzielt werden.

In einer weiteren Ausgestaltung wird vorgeschlagen, dass die Antriebseinheit dazu vorgesehen ist, zu dem Antrieb des Verbrauchers ein wenigstes im Wesentlichen um zumindest eine Drehachse rotierendes und in einen Lebensmittelaufnahmeraum wenigstens teilweise eingreifendes Magnetfeld bereitzustellen. Der Lebensmittelaufnahmeraum ist insbesondere zu einer Aufnahme zumindest eines Lebensmittels vorgesehen. Unter einem "wenigstens im Wesentlichen um zumindest eine Drehachse rotierenden" Magnetfeld soll insbesondere ein Magnetfeld verstanden werden, dessen Polarität sich insbesondere im zeitlichen Mittel um die Drehachse bewegt.

Beispielsweise könnte das Magnetfeld wenigstens im Wesentlichen kontinuierlich um die Drehachse rotieren. Das Magnetfeld könnte insbesondere schrittweise, insbesondere in kleinen beispielsweise diskreten Stufen, um die Drehachse rotieren. Unter einem "wenigstens teilweise in einen Lebensmittelaufnahmeraum eingreifenden" Magnetfeld soll insbesondere ein Magnetfeld verstanden werden, dessen Feldlinien zumindest zu einem Teil in den Lebensmittelaufnahmeraum eingreifen und in diesem insbesondere messbar vorhanden sind, wobei ein weiterer Teil der Feldlinien außerhalb des Lebensmittelaufnahmeraums angeordnet sein könnte. Dadurch kann ein besonders vorteilhafter Antrieb des Verbrauchers ermöglicht werden.

Zudem wird vorgeschlagen, dass das Gargeschirr zumindest den Verbraucher aufweist, welcher als Lebensmittelbearbeitungseinheit ausgebildet ist. Unter einer "Lebensmittelbearbeitungseinheit" soll insbesondere eine Einheit verstanden werden, welche dazu vorgesehen ist, in wenigstens einem Betriebszustand zumindest ein Lebensmittel, welches insbesondere in dem Lebensmittelaufnahmeraum angeordnet ist, insbesondere in einer über eine reine Beheizung hinausgehenden Weise, zu bearbeiten, und welche insbesondere zumindest ein Bearbeitungswerkzeug aufweist, welches dazu vorgesehen ist, in wenigstens einem Betriebszustand in direktem Kontakt mit dem Lebensmittel zu stehen. Das Bearbeitungswerkzeug ist insbesondere dazu vorgesehen, in wenigstens einem Betriebszustand zumindest ein in dem Lebensmittelaufnahmeraum angeordnetes Lebensmittel zu bearbeiten, insbesondere zu mixen und/oder zu verrühren und/oder zu mahlen und/oder zu zerkleinern und/oder zu vermischen und/oder zu emulgieren und/oder zu kneten und/oder zu zerschneiden. Das Bearbeitungswerkzeug ist insbesondere dazu vorgesehen, in wenigstens einem Betriebszustand zumindest ein in dem Lebensmittelaufnahmeraum angeordnetes Lebensmittel insbesondere ausgehend von zumindest einem ruhenden Zustand in Bewegung zu versetzen und/oder insbesondere ausgehend von einem bewegten Zustand in Bewegung zu halten. In wenigstens einem Betriebszustand der Lebensmittelbearbeitungseinheit ist insbesondere zumindest ein Teil der Lebensmittelbearbeitungseinheit, insbesondere das Bearbeitungswerkzeug, dazu vorgesehen, in direktem Kontakt mit dem Lebensmittel zu stehen. Die Lebensmittelbearbeitungseinheit ist insbesondere dazu vorgesehen, unterschiedliche Arten und/oder Konsistenzen von Lebensmitteln zu bearbeiten, wie beispielsweise Teig und/oder Flüssigkeit und/oder zumindest teilweise fluide Materialien und/oder Saucen und/oder zumindest teilweise feste Lebensmittel. Insbesondere weist die Lebensmittelbearbeitungseinheit mindestens zwei, insbesondere mindestens drei, vorteilhaft mindestens fünf und vorzugsweise mindestens sieben verschiedene Bearbeitungswerkzeuge auf. Dadurch kann insbesondere ein hoher Komfort erreicht werden. Insbesondere kann eine hohe Energieeffizienz ermöglicht werden, insbesondere aufgrund einer Bewegung eines zu garenden zumindest teilweise fluiden Lebensmittels. Eine komfortable und/oder einfache Bedienbarkeit kann insbesondere ermöglicht werden, wobei insbesondere Garparameter in einfacher Weise kontrolliert und/oder beeinflusst werden können. Insbesondere kann eine hohe Flexibilität erzielt werden. Insbesondere kann eine geringe Wahrscheinlichkeit eines Anbrennens und/oder eine geringe Quellzeit erzielt werden, wodurch insbesondere eine hohe Beständigkeit und/oder eine langlebige Ausgestaltung eines Gargeschirrs, innerhalb dessen die Lebensmittelbearbeitungseinheit angeordnet ist, erreicht werden kann/können. Durch eine Bewegung eines zu garenden zumindest teilweise fluiden Lebensmittels können insbesondere reproduzierbare Garergebnisse und/oder eine geringe Inhomogenität in einem zu garenden Lebensmittel erreicht werden.

Weiterhin wird vorgeschlagen, dass der Verbraucher zumindest ein Magnetelement aufweist, welches dazu vorgesehen ist, mit dem Magnetfeld zu wechselwirken. Insbesondere ist das Magnetelement dazu vorgesehen, das Magnetfeld aufzunehmen und insbesondere in Abhängigkeit des Magnetfelds eine Rotationsbewegung um die Drehachse auszuführen. Beispielsweise könnte das Magnetelement ein Permanentmagnet und/oder ein Elektromagnet und/oder ein Induktor sein. Das Magnetelement könnte beispielsweise einstückig mit dem Bearbeitungswerkzeug ausgebildet sein, welches insbesondere zumindest einen Magnet aufweisen und zu einem Empfang des von der Antriebseinheit erzeugten Magnetfelds vorgesehen sein könnte. Alternativ könnten das Magnetelement und das Bearbeitungswerkzeug als separate Elemente ausgebildet und insbesondere in wenigstens einem montierten Zustand insbesondere mechanisch miteinander verbunden sein. Dadurch kann insbesondere eine Ausnehmung in einem den Lebensmittelaufnahmeraum begrenzenden Innengehäuseteil vermieden und/oder eine einfache Reinigung ermöglicht werden.

Beispielsweise könnte das Gargeschirr zumindest eine Elektronikeinheit aufweisen, welche insbesondere separat von einer Kochfeld-Steuereinheit ausgebildet und vorteilhaft unabhängig von Steuerbefehlen einer Kochfeld-Steuereinheit dazu vorgesehen sein könnte, die Antriebseinheit anzusteuern und/oder zu betreiben. Die Elektronikeinheit könnte beispielsweise dazu vorgesehen sein, in Abhängigkeit einer Bedieneingabe mittels einer Bedieneinheit des Gargeschirrs die Antriebseinheit anzusteuern und/oder zu betreiben. Alternativ könnte das Gargeschirr eine Elektronikeinheit aufweisen, welche zumindest einen Filter aufweist und insbesondere dazu vorgesehen sein könnte, zumindest hochfrequente Signale auszufiltern. Eine Kochfeld-Steuereinheit könnte insbesondere dazu vorgesehen sein, in Abhängigkeit einer Bedieneingabe mittels einer Kochfeld-Bedieneinheit die Antriebseinheit anzusteuern und/oder zu betreiben. Vorzugsweise weist das Gargeschirr zumindest eine Elektronikeinheit auf, die dazu vorgesehen ist, Steuerbefehle von einer Kochfeld-Steuereinheit zu empfangen. Die Elektronikeinheit ist insbesondere dazu vorgesehen, in Abhängigkeit zumindest eines Steuerbefehls von der Kochfeld-Steuereinheit die Antriebseinheit anzusteuern und/oder zu betreiben. Insbesondere könnten die Kochfeld-Steuereinheit und die Elektronikeinheit mittels Bluetooth und/oder mittels Infrarot und/oder mittels eines lokalen Funknetzes miteinander kommunizieren. Unter einer "Elektronikeinheit" soll insbesondere eine elektronische Einheit verstanden werden, die eine Recheneinheit und insbesondere zusätzlich zur Recheneinheit eine Speichereinheit mit einem darin gespeicherten Betriebsprogramm aufweist, das dazu vorgesehen ist, von der Recheneinheit ausgeführt zu werden. Unter einer "Kochfeld-Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest eine Versorgungselektronik, welche insbesondere zu einer Versorgung zumindest einer Induktionseinheit und/oder zumindest eines Induktionsheizelements vorgesehen ist, zu steuern und/oder zu regeln. Vorzugsweise umfasst die Kochfeld-Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Kochfeld-Steuereinheit könnte beispielsweise dazu vorgesehen sein, Steuerbefehle mittels eigenständiger Signale und/oder mittels aufmodulierter Signale zu übertragen. Dadurch kann insbesondere ein hoher Bedienkomfort erreicht werden, da insbesondere eine Steuerung wenigstens eines Betriebsparameters des Verbrauchers über eine Kochfeld-Bedieneinheit einer Kochfeldvorrichtung, welche insbesondere Teil eines Kochfelds und/oder Kochfeldsystems ist, erfolgen kann. Ferner kann eine Komplexität der Elektronikeinheit vorteilhaft gering gehalten werden.

Das Gargeschirr weist vorzugsweise zumindest eine Gargeschirrgehäuseeinheit auf, innerhalb welcher in wenigstens einem montierten Zustand zumindest die Empfangseinheit und insbesondere zusätzlich die Antriebseinheit angeordnet ist/sind. Die Gargeschirrgehäuseeinheit definiert insbesondere den Lebensmittelaufnahmeraum. Die Gargeschirrgehäuseeinheit weist insbesondere zumindest ein Innengehäuseteil auf, welches insbesondere dem Lebensmittelaufnahmeraum zugewandt angeordnet ist und vorteilhaft den Lebensmittelaufnahmeraum wenigstens im Wesentlichen begrenzt. Insbesondere weist die Gargeschirrgehäuseeinheit zumindest ein Außengehäuseteil auf, welches insbesondere dem Lebensmittelaufnahmeraum abgewandt angeordnet ist und vorteilhaft eine äußere, insbesondere für einen Bediener in einem Betriebszustand sichtbare Gestalt der Gargeschirrgehäuseeinheit und insbesondere des Gargeschirrs definiert. Das Außengehäuseteil und das Innengehäuseteil sind in wenigstens einem montierten Zustand insbesondere mechanisch miteinander verbunden und begrenzen insbesondere zumindest einen Zwischenraum. In dem Betriebszustand ist die Empfangseinheit insbesondere von der Gargeschirrgehäuseeinheit umschlossen. Insbesondere ist die Empfangseinheit in dem Betriebszustand wenigstens zu einem Großteil zwischen dem Außengehäuseteil und dem Innengehäuseteil, insbesondere in dem Zwischenraum, angeordnet. In dem Betriebszustand ist die Empfangseinheit insbesondere in dem Gargeschirr, vorteilhaft in der Gargeschirrgehäuseeinheit, integriert. Dadurch kann insbesondere eine geschützte Anordnung der Empfangseinheit erreicht werden. Insbesondere kann eine hohe Stabilität erzielt werden.

Weiterhin wird vorgeschlagen, dass die Gargeschirrgehäuseeinheit zumindest ein einem Lebensmittelaufnahmeraum abgewandtes Außengehäuseteil und zumindest ein dem Lebensmittelaufnahmeraum zugewandtes Innengehäuseteil aufweist, welche aus Materialien mit unterschiedlichen magnetischen Eigenschaften bestehen. Insbesondere besteht das Innengehäuseteil wenigstens zu einem Großteil aus einem Metall, insbesondere einem magnetischen Metall, vorteilhaft aus einem ferromagnetischen Metall. Das Innengehäuseteil könnte beispielsweise wenigstens zu einem Großteil aus Eisen und/oder ferromagnetischem Stahl bestehen. Insbesondere besteht das Außengehäuseteil wenigstens zu einem Großteil aus einem Nichtmetall. Das Außengehäuseteil könnte beispielsweise wenigstens zu einem Großteil aus Kunststoff und/oder Keramik bestehen. Dadurch kann insbesondere eine Erwärmung auf dafür vorgesehene Bereiche beschränkt und vorteilhaft wenigstens im Wesentlichen zeitgleich in dafür vorgesehenen weiteren Bereichen eine Energieübertragung ermöglicht werden. Insbesondere kann eine hohe Flexibilität hinsichtlich einer Gestaltungsmöglichkeit erreicht werden.

Ferner wird vorgeschlagen, dass das Außengehäuseteil und das Innengehäuseteil zumindest einen Zwischenraum definieren, welcher wenigstens zu einem Großteil mit einem Isolationsmaterial gefüllt ist. Die Gargeschirrgehäuseeinheit weist insbesondere zumindest das Isolationsmaterial auf, welches in wenigstens einem montierten Zustand zwischen dem Außengehäuseteil und dem Innengehäuseteil angeordnet ist. Insbesondere besteht das Isolationsmaterial wenigstens zu einem Großteil aus einem Material mit einer geringen Wärmeleitfähigkeit. Das Isolationsmaterial könnte beispielsweise wenigstens zu einem Großteil aus Kunststoff und/oder Mineralwolle und/oder Teflon bestehen. Dadurch kann insbesondere eine hohe Effizienz ermöglicht werden. Insbesondere können Baueinheiten, welche in dem Zwischenraum angeordnet sind, geschützt gelagert werden.

Das Gargeschirr könnte insbesondere zumindest einen Sensor umfassen, der dazu vorgesehen sein könnte, zumindest eine Bewegungskomponente, insbesondere zumindest ein Drehmoment und/oder zumindest ein Beschleunigungsmoment und/oder ein Rotationsmoment und/oder eine Rotationsgeschwindigkeit, der Lebensmittelbearbeitungseinheit zu detektieren. Der Sensor könnte beispielsweise dazu vorgesehen sein, zumindest eine Sensorkenngröße, welche insbesondere die Bewegungskomponente der Lebensmittelbearbeitungseinheit charakterisiert, an die Kochfeld-Steuereinheit zu übermitteln. Insbesondere könnte der Sensor zu einer optischen Detektion der Bewegungskomponente der Lebensmittelbearbeitungseinheit vorgesehen und beispielsweise als Fotozelle ausgebildet sein. Alternativ oder zusätzlich könnte der Sensor zu einer Detektion der Bewegungskomponente der Lebensmittelbearbeitungseinheit mittels eines Magnetfelds, welches insbesondere von dem Magnetelement ausgehen könnte, vorgesehen sein. Insbesondere könnte die Kochfeld-Steuereinheit dazu vorgesehen sein, in Abhängigkeit der Sensorkenngröße eine Änderung einer Bewegungskomponente eines zu bearbeitenden Lebensmittels zu ermitteln und insbesondere zumindest einen automatischen Bearbeitungsvorgang und/oder zumindest einen automatischen Garvorgang durchzuführen. Alternativ oder zusätzlich könnte der Sensor dazu vorgesehen sein, eine Temperatur und/oder einen PH-Wert und/oder ein Gewicht und/oder einen Garzustand, wie beispielsweise Kochen und/oder Simmern und/oder Sieden und/oder Überkochen, eines in dem Lebensmittelaufnahmeraum angeordneten Lebensmittels zu detektieren. Der Sensor könnte beispielsweise ein Infrarot-Sensor und/oder ein Widerstands-Sensor, beispielsweise ein NTC-Widerstand und/oder ein PTC-Widerstand, und/oder ein akustischer Sensor, beispielsweise ein Mikrophon, und/oder ein Drucksensor und/oder ein Gewichtssensor zu einer Detektion eines Gewichts von in dem Lebensmittelaufnahmeraum angeordneter Lebensmittel und/oder ein Volumensensor zu einer Detektion eines in dem Lebensmittelaufnahmeraum angeordneten Volumens an Lebensmittel sein.

In einer weiteren Ausgestaltung wird ein Kochsystem mit zumindest einem erfindungsgemäßen Gargeschirr und mit zumindest einer Kochfeldvorrichtung, insbesondere einer Induktionskochfeldvorrichtung, vorgeschlagen, die zumindest eine Induktionseinheit aufweist, welche zumindest zu einer Bereitstellung von Energie für die Empfangseinheit des Gargeschirrs vorgesehen ist. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Unter einer "Induktionseinheit" soll insbesondere eine Einheit verstanden werden, welche dazu vorgesehen ist, in wenigstens einem Betriebszustand zumindest ein elektromagnetisches Wechselfeld zu einer Energieübertragung bereitzustellen. Die Induktionseinheit ist insbesondere dazu vorgesehen, in wenigstens einem Betriebszustand mittels des elektromagnetischen Wechselfelds in der Empfangseinheit des Gargeschirrs zumindest einen Induktionsstrom zu erzeugen und/oder hervorzurufen. Die Kochfeldvorrichtung weist insbesondere zumindest eine Kochfeld-Bedieneinheit auf, welche zumindest zu einer Eingabe zumindest eines Bearbeitungsparameters, insbesondere einer Rotationsgeschwindigkeit und/oder einer Bearbeitungsstartzeit und/oder einer Bearbeitungsendzeit und/oder einer Bearbeitungsdauer, der Lebensmittelbearbeitungseinheit vorgesehen ist. Die Kochfeld-Bedieneinheit ist insbesondere dazu vorgesehen, einem Bediener zumindest zwei, insbesondere zumindest drei, vorteilhaft zumindest vier und vorzugsweise zumindest fünf Bearbeitungsparameter zur Auswahl bereitzustellen und/oder anzuzeigen. Insbesondere weist die Kochfeldvorrichtung zumindest eine Kochfeld-Steuereinheit auf, welche dazu vorgesehen ist, zumindest die Elektronikeinheit und/oder Antriebseinheit anzusteuern. Insbesondere ist die Kochfeld-Steuereinheit, insbesondere mittels einer Ansteuerung der Elektronikeinheit und/oder der Antriebseinheit, zu einer Steuerung und/oder Regelung des Bearbeitungsparameters der Lebensmittelbearbeitungseinheit vorgesehen. Die Kochfeld-Steuereinheit ist insbesondere dazu vorgesehen, die Elektronikeinheit und/oder die Antriebseinheit in Abhängigkeit von einer Bedieneingabe mittels einer Kochfeld-Bedieneinheit anzusteuern. Dadurch kann insbesondere ein hoher Komfort erreicht werden.

Weiterhin wird vorgeschlagen, dass die Induktionseinheit zumindest ein von einem Induktionsheizelement verschieden ausgebildetes Energieübertragungselement aufweist, das dazu vorgesehen ist, in wenigstens einem Betriebszustand die Energie für die Empfangseinheit bereitzustellen. Insbesondere weist das Energieübertragungselement zumindest einen Induktor und/oder zumindest eine Spule auf. Das Energieübertragungselement ist insbesondere dazu vorgesehen, in wenigstens einem Betriebszustand die Energie für die Empfangseinheit zumindest mittels einer induktiven Energieübertragung bereitzustellen. Dadurch kann insbesondere eine große Menge an Leistung bereitgestellt werden, insbesondere in einem Vergleich zu einer Verwendung eines Permanentmagneten.

Ferner wird vorgeschlagen, dass die Induktionseinheit zumindest ein Induktionsheizelement aufweist, das dazu vorgesehen ist, in wenigstens einem Betriebszustand die Energie für die Empfangseinheit bereitzustellen. Insbesondere ist das Induktionsheizelement dazu vorgesehen, in wenigstens einem Betriebszustand, insbesondere zusätzlich zu der Bereitstellung von Energie für die Empfangseinheit, zumindest einen Teil des Gargeschirrs, insbesondere zumindest einen Teil des Innengehäuseteils des Gargeschirrs, zu erhitzen. Unter einem "Induktionsheizelement" soll in diesem Zusammenhang insbesondere ein Element verstanden werden, welches dazu vorgesehen ist, ein elektromagnetisches Wechselfeld insbesondere mit einer Frequenz zwischen 20 kHz und 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Dadurch kann insbesondere eine hohe Flexibilität erreicht werden, insbesondere im Hinblick auf eine Aufstellposition des Gargeschirrs und/oder im Hinblick auf Aufgaben des Induktionsheizelements. Insbesondere kann auf zusätzliche Baueinheiten insbesondere in Form zumindest eines Energieübertragungselements und/oder zumindest eines zusätzlichen Induktionsheizelements verzichtet werden, wodurch vorteilhaft eine kompakte Ausgestaltung und/oder geringe Kosten erzielt werden können/kann.

Das Gargeschirr und das Kochsystem sollen hierbei nicht auf die oben beschriebene Anwendung und Ausführungsform beschränkt sein. Insbesondere kann das Gargeschirr und das Kochsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochsystem mit einem Gargeschirr und mit einer Kochfeldvorrichtung in einer schematischen Schnittdarstellung,
- Fig. 2: das Kochsystem mit der Kochfeldvorrichtung und mit dem Gargeschirr in einer schematischen Draufsicht,
- Fig. 3: einen vergrößerten Ausschnitt aus Figur 2,
- Fig. 4: eine Kochfeld-Bedieneinheit der Kochfeldvorrichtung in einer schematischen Draufsicht,
- Fig. 5: ein alternatives Kochsystem mit einer alternativen Kochfeldvorrichtung und mit einem Gargeschirr in einer schematischen Draufsicht,
- Fig. 6: einen vergrößerten Ausschnitt aus Figur 5,
- Fig. 7: ein alternatives Kochsystem mit einer Kochfeldvorrichtung und mit einem Gargeschirr in einer schematischen Schnittdarstellung und
- Fig. 8: ein alternatives Kochsystem mit einer Kochfeldvorrichtung und mit einem Gargeschirr in einer schematischen Schnittdarstellung.

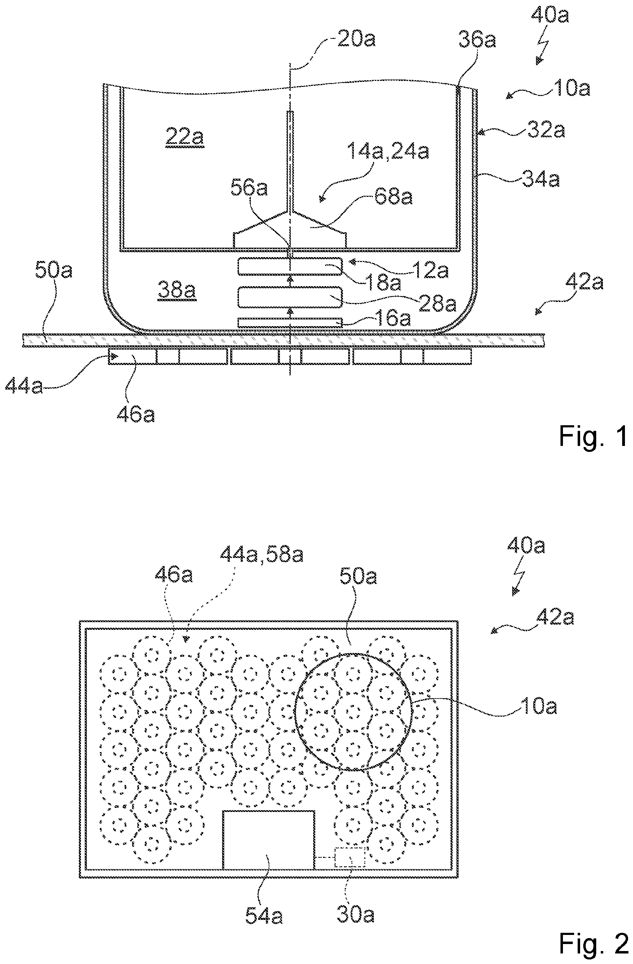

Fig. 1 zeigt ein Kochsystem 40a, das als ein Induktionskochsystem ausgebildet ist, mit einem Gargeschirr 10a und mit einer Kochfeldvorrichtung 42a, die als eine Induktionskochfeldvorrichtung ausgebildet ist. Die Kochfeldvorrichtung 42a umfasst eine Kochfeldplatte 50a. In einem montierten Zustand bildet die Kochfeldplatte 50a einen Teil eines Kochfeldaußengehäuses aus. Die Kochfeldplatte 50a ist zu einem Aufstellen von Gargeschirr 10a vorgesehen.

Das Gargeschirr 10a weist eine Gargeschirrgehäuseeinheit 32a auf. Die Gargeschirrgehäuseeinheit 32a definiert einen Lebensmittelaufnahmeraum 22a. Die Gargeschirrgehäuseeinheit 32a des Gargeschirrs 10a weist ein dem Lebensmittelaufnahmeraum 22a abgewandtes Außengehäuseteil 34a auf. Die Gargeschirrgehäuseeinheit 32a des Gargeschirrs 10a weist ein dem Lebensmittelaufnahmeraum 22a zugewandtes Innengehäuseteil 36a auf.

Das Außengehäuseteil 34a und das Innengehäuseteil 36a bestehen aus Materialien mit unterschiedlichen magnetischen Eigenschaften. Das Außengehäuseteil 34a besteht zu einem Großteil aus einem Nichtmetall. Das Innengehäuseteil 36a besteht zu einem Großteil aus einem ferromagnetischen Metall.

Das Außengehäuseteil 34a und das Innengehäuseteil 36a definieren einen Zwischenraum 38a. Das Gargeschirr 10a weist ein Isolationsmaterial (nicht dargestellt) auf. Der Zwischenraum 38a ist zu einem Großteil mit dem Isolationsmaterial gefüllt.

Das Gargeschirr 10a weist einen Verbraucher 14a auf. In einem montierten Zustand ist der Verbraucher 14a innerhalb des Lebensmittelaufnahmeraums 22a angeordnet. Der Verbraucher 14a ist als eine Lebensmittelbearbeitungseinheit 24a ausgebildet. Die Lebensmittelbearbeitungseinheit 24a weist ein Bearbeitungswerkzeug 68a auf. Das Bearbeitungswerkzeug 68a ist zu einer Bearbeitung von in dem Lebensmittelaufnahmeraum 22a angeordneten Lebensmitteln vorgesehen. In dem montierten Zustand ist das Bearbeitungswerkzeug 68a in dem Lebensmittelaufnahmeraum 22a angeordnet. In dem montierten Zustand ist der Verbraucher 14a in einem Nahbereich eines Bodens des Innengehäuseteils 36a angeordnet.

Das Gargeschirr 10a weist eine Antriebseinheit 12a auf. Die Antriebseinheit 12a treibt in einem Betriebszustand den Verbraucher 14a des Gargeschirrs 10a an. In dem montierten Zustand ist die Antriebseinheit 12a innerhalb der Gargeschirrgehäuseeinheit 32a angeordnet. Die Antriebseinheit 12a ist in dem montierten Zustand in dem Zwischenraum 38a angeordnet. In dem montierten Zustand ist die Antriebseinheit 12a in einem Nahbereich des Bodens des Innengehäuseteils 36a angeordnet. Die Antriebseinheit 12a und der Verbraucher 14a sind in dem montierten Zustand durch den Boden des Innengehäuseteils 36a voneinander getrennt.

In dem Zwischenraum 38a ist in dem montierten Zustand zusätzlich zu der Antriebseinheit 12a eine Empfangseinheit 16a des Gargeschirrs 10a angeordnet. Das Gargeschirr 10a weist die Empfangseinheit 16a auf. Die Empfangseinheit 16a ist zu einem kontaktlosen Empfang von Energie vorgesehen. In dem montierten Zustand ist die Empfangseinheit 16a in einem Nahbereich eines Bodens des Außengehäuseteils 34a angeordnet.

Die Empfangseinheit 16a weist einen Induktor auf. In dem Betriebszustand ist die Empfangseinheit 16a dazu vorgesehen, durch ein elektromagnetisches Wechselfeld magnetisiert zu werden. Die Empfangseinheit 16a ist zu einem Empfang einer mittels induktiver Energieübertragung übertragenen Energie vorgesehen. In dem Betriebszustand ist die Empfangseinheit 16a zu einer Energieversorgung der Antriebseinheit 12a vorgesehen.

Die Antriebseinheit 12a stellt in dem Betriebszustand ein Magnetfeld zu dem Antrieb des Verbrauchers 14a bereit. Die Antriebseinheit 12a weist einen Elektromotor 18a auf. In dem Betriebszustand stellt die Antriebseinheit 12a das Magnetfeld zu dem Antrieb des Verbrauchers 14a innerhalb des Elektromotors 18a bereit. Der Elektromotor 18a erzeugt mittels des Magnetfelds eine Rotationsbewegung um eine Drehachse 20a. In dem Betriebszustand treibt der Elektromotor 18a den Verbraucher 14a mittels der Rotationsbewegung an.

Das Gargeschirr 10a weist eine Welle 56a auf. Die Welle 56a verbindet in dem montierten Zustand den Elektromotor 18a und den Verbraucher 14a miteinander. In dem Betriebszustand leitet die Welle 56a die von dem Elektromotor 18a erzeugte Rotationsbewegung an den Verbraucher 14a weiter.

Die Welle 56a ist in dem montierten Zustand teilweise in dem Zwischenraum 38a angeordnet. Das Innengehäuseteil 36a weist eine Ausnehmung (nicht dargestellt) auf. In dem montierten Zustand greift die Welle 56a durch die Ausnehmung des Innengehäuseteils 36a hindurch. Zwischen der Welle 56a und einer seitlichen Begrenzung der Ausnehmung ist eine Dichtung angeordnet, welche ein Eindringen von in dem Lebensmittelaufnahmeraum 22a angeordneter Lebensmittel in den Zwischenraum 38a im Wesentlichen verhindert.

Das Gargeschirr 10a weist eine Elektronikeinheit 28a auf. In dem montierten Zustand ist die Elektronikeinheit 28a innerhalb der Gargeschirrgehäuseeinheit 32a angeordnet. Die Elektronikeinheit 28a ist in dem montierten Zustand in dem Zwischenraum 38a angeordnet. In dem Betriebszustand ist die Elektronikeinheit 28a zu einer Ansteuerung der Antriebseinheit 12a vorgesehen. Die Elektronikeinheit 28a verwaltet in dem Betriebszustand eine von der Empfangseinheit 16a zu der Energieversorgung bereitgestellte Energie. Die Elektronikeinheit 28a regelt in dem Betriebszustand eine Energieversorgung von der Empfangseinheit 16a zu der Antriebseinheit 12a.

Die Kochfeldvorrichtung 42a weist eine Induktionseinheit 44a auf (vgl. Fig. 1 bis 3). Die Induktionseinheit 44a ist zu einer Bereitstellung von Energie für die Empfangseinheit 16a des Gargeschirrs 10a vorgesehen. In dem Betriebszustand stellt die Induktionseinheit 44a ein elektromagnetisches Wechselfeld zu der Bereitstellung von Energie für die Empfangseinheit 16a bereit. Die Induktionseinheit 44a versorgt die Empfangseinheit 16a mittels induktiver Energieübertragung mit Energie.

Im vorliegenden Ausführungsbeispiel bildet die Induktionseinheit 44a einen variablen Kochflächenbereich 58a aus. Die Induktionseinheit 44a weist mehrere Induktionsheizelemente 46a auf. Von mehrfach vorhandenen Objekten ist in den Figuren jeweils lediglich eines mit einem Bezugszeichen versehen. Die Induktionsheizelemente 46a sind in Form einer Matrix angeordnet. Alternativ könnten die Induktionsheizelemente insbesondere ein klassisches Kochfeld ausbilden, bei welchem insbesondere durch eine Position der Induktionsheizelemente definierte, fest vorgegebene Heizzonen existieren könnten, welche insbesondere auf der Kochfeldplatte markiert sein könnten.

Im vorliegenden Ausführungsbeispiel weist die Induktionseinheit 44a achtundvierzig Induktionsheizelemente 46a auf. Im Folgenden wird lediglich eines der Induktionsheizelemente 46a beschrieben. Das Induktionsheizelement 46a ist dazu vorgesehen, auf der Kochfeldplatte 50a oberhalb des Induktionsheizelements 46a aufgestelltes Gargeschirr 10a zu erhitzen. In dem Betriebszustand stellt das Induktionsheizelement 46a die Energie für die Empfangseinheit 16a bereit.

Die Kochfeldvorrichtung 42a weist eine Kochfeld-Bedieneinheit 54a zu einer Eingabe und/oder Auswahl von Betriebsparametern auf, beispielsweise einer Heizleistung und/oder einer Heizleistungsdichte und/oder einer Heizzone. Die Kochfeld-Bedieneinheit 54a ist zu einer Ausgabe eines Werts eines Betriebsparameters an einen Bediener vorgesehen.

Die Kochfeldvorrichtung 42a weist die Kochfeld-Steuereinheit 30a auf. Die Kochfeld-Steuereinheit 30a ist dazu vorgesehen, in Abhängigkeit von mittels der Kochfeld-Bedieneinheit 54a eingegebenen Betriebsparametern Aktionen auszuführen und/oder Einstellungen zu verändern. Die Kochfeld-Steuereinheit 30a regelt zu einer Durchführung eines Heizvorgangs eine Energiezufuhr zu der Induktionseinheit 44a. Zu der Durchführung des Heizvorgangs ist das Gargeschirr 10a zu einem Aufstellen auf der Kochfeldplatte 50a vorgesehen.

In dem Betriebszustand sendet die Kochfeld-Steuereinheit 30a Steuerbefehle an die Elektronikeinheit 28a des Gargeschirrs 10a. Die Elektronikeinheit 28a empfängt in dem Betriebszustand die Steuerbefehle von der Kochfeld-Steuereinheit 30a. In dem Betriebszustand kommuniziert die Elektronikeinheit 28a mit der Kochfeld-Steuereinheit 30a. In Abhängigkeit von den von der Kochfeld-Steuereinheit 30a empfangenen Steuerbefehlen regelt die Elektronikeinheit 28a in dem Betriebszustand eine Energieversorgung von der Empfangseinheit 16a zu der Antriebseinheit 12a.

Im vorliegenden Ausführungsbeispiel ist die Lebensmittelbearbeitungseinheit 24a als eine Rühreinheit ausgebildet. Die Lebensmittelbearbeitungseinheit 24a ist dazu vorgesehen, innerhalb des Lebensmittelaufnahmeraums 22a angeordnete Lebensmittel zu verrühren.

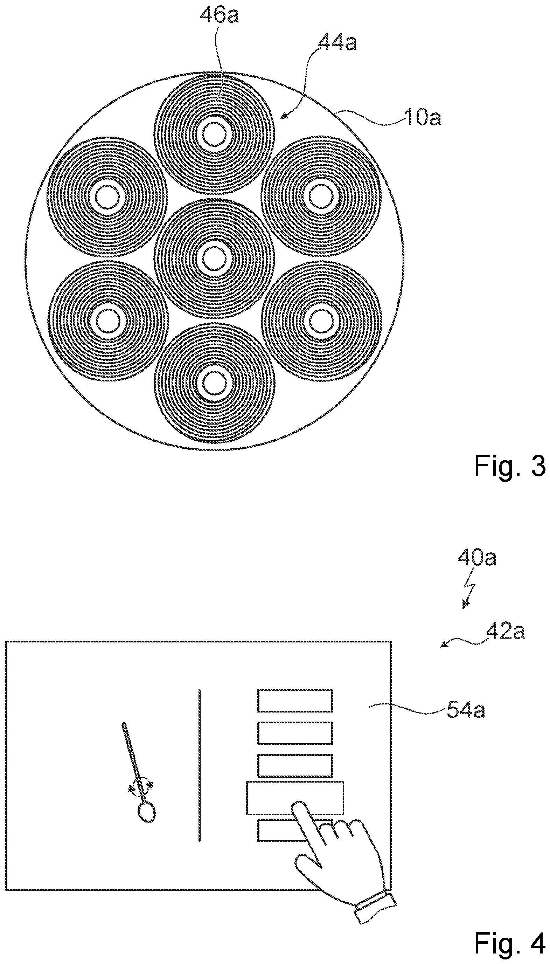

Die Kochfeld-Bedieneinheit 54a ist zu einer Eingabe einer Rotationsgeschwindigkeit der Lebensmittelbearbeitungseinheit 24a vorgesehen (vgl. Fig. 4). Im vorliegenden Ausführungsbeispiel weist die Kochfeld-Bedieneinheit 54a ein berührungsempfindliches Bedienelement zu einer Eingabe der Rotationsgeschwindigkeit der Lebensmittelbearbeitungseinheit 24a auf. Die Kochfeld-Bedieneinheit 54a weist eine Anzeigeeinheit auf. Die Kochfeld-Bedieneinheit 54a stellt einem Bediener eine Auswahl an Rotationsgeschwindigkeiten mittels der Anzeigeeinheit zur Verfügung. Die Anzeigeeinheit ist dazu vorgesehen, eine von einem Bediener ausgewählte Rotationsgeschwindigkeit vergrößert darzustellen.

Die Kochfeld-Steuereinheit könnte beispielsweise in Abhängigkeit von einer Bedieneingabe mittels der Kochfeld-Bedieneinheit die Antriebseinheit zu einer Steuerung der Rotationsgeschwindigkeit der Lebensmittelbearbeitungseinheit ansteuern. Alternativ könnte die Kochfeld-Steuereinheit insbesondere zumindest einen Steuerbefehl an die Elektronikeinheit übermitteln, welche insbesondere dazu vorgesehen sein könnte, in Abhängigkeit von dem Steuerbefehl die Antriebseinheit zu einer Steuerung der Rotationsgeschwindigkeit der Lebensmittelbearbeitungseinheit anzusteuern.

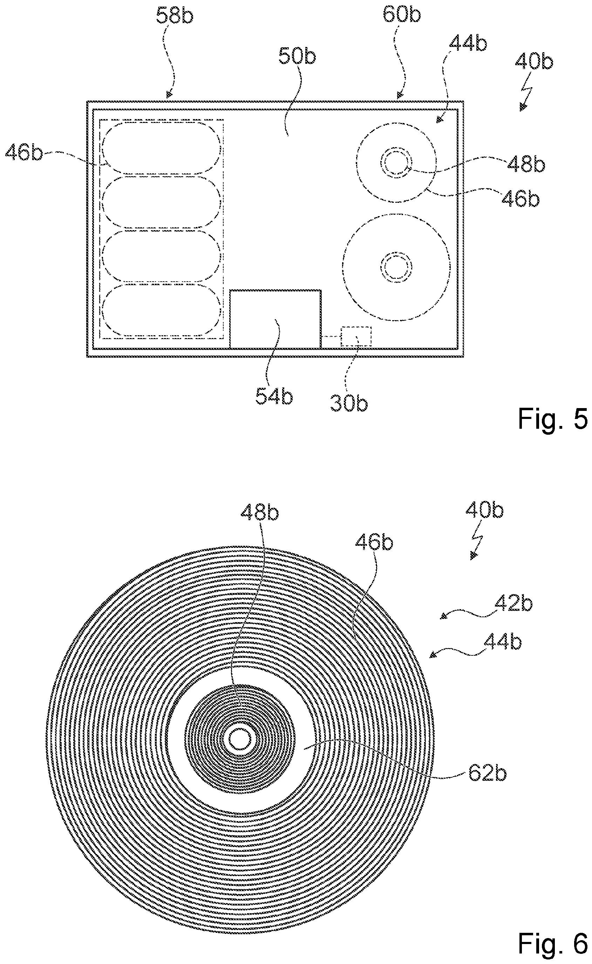

In Fig. 5 bis 8 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 4 verwiesen werden kann. Zur Unterscheidung der Ausführungsbeispiele ist der Buchstabe a in den Bezugszeichen des Ausführungsbeispiels in den Fig. 1 bis 4 durch die Buchstaben b bis d in den Bezugszeichen des Ausführungsbeispiels der Fig. 5 bis 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 4 verwiesen werden.

Fig. 5 zeigt ein alternatives Kochsystem 40b mit einer alternativen Kochfeldvorrichtung 42b. Die Kochfeldvorrichtung 42b weist mehrere Induktionsheizelemente 46b auf. Ein Teil der Induktionsheizelemente 46b definiert einen variablen Kochflächenbereich 58b. In einem Betriebszustand ist der variable Kochflächenbereich 58a dazu vorgesehen, auf einer Kochfeldplatte 50b oberhalb des variablen Kochflächenbereichs 58b aufgestelltes Gargeschirr 10b zu erhitzen.

Ein Teil der Induktionsheizelemente 46b bildet ein klassisches Kochfeld 60b aus. Der variable Kochflächenbereich 58b und das klassische Kochfeld 60b sind nebeneinander angeordnet. Die Induktionsheizelemente 46b des variablen Kochflächenbereichs 58b und die Induktionsheizelemente 46b des klassischen Kochfelds 60b sind verschieden ausgebildet. Die Induktionsheizelemente 46b des klassischen Kochfelds 60b weisen eine im Wesentlichen runde Gestalt auf. Die Induktionsheizelemente 46b des variablen Kochflächenbereichs 58b weisen eine im Wesentlichen ovale Gestalt auf.

Im Folgenden wird beispielsweise eines der Induktionsheizelemente 46b des klassischen Kochfelds 60b beschrieben. Die Induktionsheizelemente 46b des variablen Kochflächenbereichs 58b könnten analog hierzu ausgestaltet sein.

Eine Induktionseinheit 44b der Kochfeldvorrichtung 42b weist mehrere Energieübertragungselemente 48b auf. Von den Energieübertragungselementen 48b wird im Folgenden lediglich eines beschrieben.

Das Energieübertragungselement 48b ist von dem Induktionsheizelement 46b verschieden ausgebildet. Die Induktionseinheit 44b weist mehrere Spulenträger 62b auf. Die Induktionseinheit 44b weist für jedes Induktionsheizelement 46b einen Spulenträger 62b auf. Von den Spulenträgern 62b wird im Folgenden lediglich einer beschrieben.

Das Induktionsheizelement 46b und das Energieübertragungselement 48b sind auf demselben Spulenträger 62b montiert. Das Induktionsheizelement 46b ist konzentrisch um das Energieübertragungselement 48b herum angeordnet. In dem Betriebszustand stellt das Energieübertragungselement 48b die Energie für eine Empfangseinheit 16b eines Gargeschirrs 10b bereit.

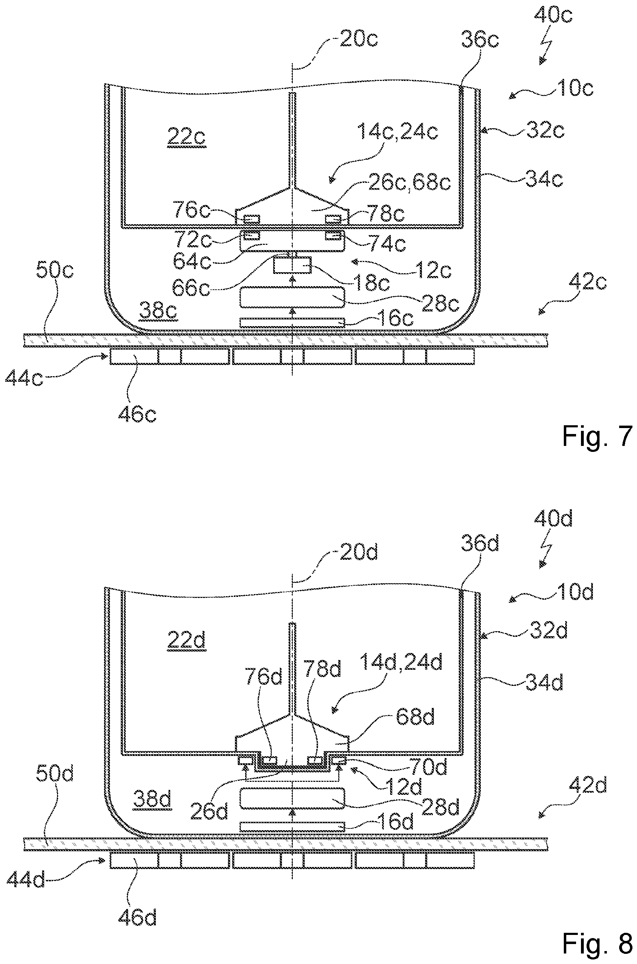

Fig. 7 zeigt ein alternatives Kochsystem 40c, mit einer alternativen Kochfeldvorrichtung 42c. Eine Antriebseinheit 12c der Kochfeldvorrichtung 42c treibt in einem Betriebszustand einen Verbraucher 14c an. In dem Betriebszustand stellt die Antriebseinheit 12c zu einem Antrieb des Verbrauchers 14c ein Magnetfeld bereit. Die Antriebseinheit 12c weist einen Elektromotor 18c auf. Der Elektromotor 18c ist zu einem Antrieb des Verbrauchers 14c vorgesehen.

Im vorliegenden Ausführungsbeispiel weist die Antriebseinheit 12c einen Permanentmagneten 64c auf. In dem montierten Zustand ist der Permanentmagnet 64c um eine Drehachse 20c rotierbar gelagert. Die Antriebseinheit 12c weist ein Übertragungselement 66c auf. Das Übertragungselement 66c verbindet in dem montierten Zustand den Elektromotor 18c und den Permanentmagneten 64c miteinander. Das Übertragungselement 66c ist als eine Welle ausgebildet.

Der Elektromotor 18c ist zu einem Antrieb des Permanentmagneten 64c vorgesehen. In dem Betriebszustand übermittelt das Übertragungselement 66c eine von dem Elektromotor 18c bereitgestellte Rotationsbewegung an den Permanentmagneten 64c. Der Permanentmagnet 64c erzeugt in dem Betriebszustand das Magnetfeld zu dem Antrieb des Verbrauchers 14c.

Zu dem Antrieb des Verbrauchers 14c stellt die Antriebseinheit 12c ein im Wesentlichen um eine Drehachse 20c rotierendes Magnetfeld bereit. Das von der Antriebseinheit 12c bereitgestellte Magnetfeld greift in dem Betriebszustand teilweise in einen Lebensmittelaufnahmeraum 22c eines Gargeschirrs 10c ein. Die Antriebseinheit 12c stellt zu dem Antrieb des Verbrauchers 14c mittels der Rotationsbewegung des Permanentmagneten 64c das Magnetfeld bereit.

Der Verbraucher 14c weist ein Magnetelement 26c auf. Das Magnetelement 26c ist einstückig mit einem Bearbeitungswerkzeug 68c einer Lebensmittelbearbeitungseinheit 24c ausgebildet. In dem Betriebszustand wechselwirkt das Magnetelement 26c mit dem von der Antriebseinheit 12c bereitgestellten Magnetfeld.

Das Magnetelement 26c und der Permanentmagnet 64c sind zueinander korrespondierend ausgebildet. In dem Betriebszustand wechselwirken das Magnetelement 26c und der Permanentmagnet 64c miteinander. Der Permanentmagnet 64c weist zumindest einen ersten magnetischen Pol 72c und einen zumindest zweiten magnetischen Pol 74c auf. Das Magnetelement 26c weist einen zumindest ersten magnetischen Pol 76c und einen zumindest zweiten magnetischen Pol 78c auf. Beispielsweise könnten der Permanentmagnet und das Magnetelement mehrere erste magnetische Pole und mehrere zweite magnetische Pole aufweisen, insbesondere in einem ersten Fall.

In einem ersten Fall könnten die magnetischen Pole 72c, 74c des Permanentmagneten 64c insbesondere untereinander im Wesentlichen identisch ausgebildet sein. Die magnetischen Pole 76c, 78c des Magnetelements 26c könnten insbesondere untereinander im Wesentlichen identisch ausgebildet sein. Beispielsweise könnten die magnetischen Pole 72c, 74c des Permanentmagneten 64c in der Einbaulage der Kochfeldplatte 50c zugewandt angeordnet sein. Die magnetischen Pole 76c, 78c des Magnetelements 26c könnten beispielsweise in der Einbaulage der Kochfeldplatte 50c zugewandt angeordnet sein. Beispielsweise könnten die magnetischen Pole 72c, 74c des Permanentmagneten 64c als Südpole und die magnetischen Pole 76c, 78c des Magnetelements 26c als Nordpole ausgebildet sein. Alternativ könnten die magnetischen Pole 72c, 74c des Permanentmagneten 64c als Nordpole und die magnetischen Pole 76c, 78c des Magnetelements 26c als Südpole ausgebildet sein.

In einem zweiten Fall könnten die magnetischen Pole 72c, 74c des Permanentmagneten 64c insbesondere verschieden ausgebildet sein. Der erste magnetische Pol 72c des Permanentmagneten 64c könnte als Nordpol und der zweite magnetische Pol 74c des Permanentmagneten 64c könnte als Südpol ausgebildet sein. Die magnetischen Pole 76c, 78c des Magnetelements 26c könnten insbesondere verschieden ausgebildet sein. Der erste magnetische Pol 76c des Magnetelements 26c könnte als Südpol und der zweite magnetische Pol 78c des Magnetelements 26c könnte als Nordpol ausgebildet sein.

Fig. 8 zeigt ein alternatives Kochsystem 40d, mit einer alternativen Kochfeldvorrichtung 42d. Eine Antriebseinheit 12d der Kochfeldvorrichtung 42d treibt in einem Betriebszustand einen Verbraucher 14d an. In dem Betriebszustand stellt die Antriebseinheit 12d zu einem Antrieb des Verbrauchers 14d ein Magnetfeld bereit.

In einem Betriebszustand stellt die Antriebseinheit 12d ein im Wesentlichen um eine Drehachse 20d rotierendes Magnetfeld zu einem Antrieb des Verbrauchers 14d bereit. Das von der Antriebseinheit 12d bereitgestellte Magnetfeld greift in dem Betriebszustand teilweise in einen Lebensmittelaufnahmeraum 22d eines Gargeschirrs 10d ein.

Im vorliegenden Ausführungsbeispiel weist die Antriebseinheit 12d zumindest zwei Elektromagnete 70d auf. Die Antriebseinheit 12d weist mehrere Elektromagnete 70d auf. Im Folgenden wird davon ausgegangen, dass die Antriebseinheit 12d eine Anzahl von n Elektromagneten 70d aufweist.

In einem montierten Zustand sind die Elektromagnete 70d um die Drehachse 20d herum angeordnet. Die Elektromagnete 70d sind in dem montierten Zustand gleichmäßig und im Wesentlichen in einer Ebene um die Drehachse 20d herum angeordnet. In der Ebene sind die Elektromagnete 70d ausgehend von der Drehachse 20d um einen Winkel von im Wesentlichen 360°/n um die Drehachse 20d herum angeordnet.

In einem Betriebszustand ist eine Elektronikeinheit 28d des Gargeschirrs 10d dazu vorgesehen, in Abhängigkeit von von einer Kochfeld-Steuereinheit 30d übermittelten Steuerbefehlen die Elektromagnete 70d anzusteuern. Die Elektronikeinheit 28d betreibt in dem Betriebszustand die Elektromagnete 70d. In dem Betriebszustand steuert die Elektronikeinheit 28d die Elektromagnete 70d mittels Pulsweitenmodulation an. Die Elektronikeinheit 28d steuert die Elektromagnete 70d mit um im Wesentlichen 360°/n phasenversetzten Signalen an. Die Elektromagnete 70d stellen in Abhängigkeit einer Ansteuerung durch die Elektronikeinheit 28d das im Wesentlichen um die Drehachse 20d rotierende Magnetfeld zu dem Antrieb des Verbrauchers 14d bereit.

Die Antriebseinheit 12d ist frei von beweglichen Teilen. In dem Betriebszustand treibt die Antriebseinheit 12d das Magnetelement 26d des Verbrauchers 14d an. Im vorliegenden Ausführungsbeispiel weist das Magnetelement 26d einen ersten magnetischen Pol 76d und einen zweiten magnetischen Pol 78d auf. Der erste magnetische Pol 76d ist als ein Südpol ausgebildet. Der zweite magnetische Pol 78d ist als ein Nordpol ausgebildet.

### Bezugszeichen

- 10: Gargeschirr
- 12: Antriebseinheit
- 14: Verbraucher
- 16: Empfangseinheit
- 18: Elektromotor
- 20: Drehachse
- 22: Lebensmittelaufnahmeraum
- 24: Lebensmittelbearbeitungseinheit
- 26: Magnetelement
- 28: Elektronikeinheit
- 30: Kochfeld-Steuereinheit
- 32: Gargeschirrgehäuseeinheit
- 34: Außengehäuseteil
- 36: Innengehäuseteil
- 38: Zwischenraum
- 40: Kochsystem
- 42: Kochfeldvorrichtung
- 44: Induktionseinheit
- 46: Induktionsheizelement
- 48: Energieübertragungselement
- 50: Kochfeldplatte
- 54: Kochfeld-Bedieneinheit
- 56: Welle
- 58: Variabler Kochflächenbereich
- 60: Klassisches Kochfeld
- 62: Spulenträger
- 64: Permanentmagnet
- 66: Übertragungselement
- 68: Bearbeitungswerkzeug
- 70: Elektromagnet
- 72: Erster magnetischer Pol
- 74: Zweiter magnetischer Pol
- 76: Erster magnetischer Pol
- 78: Zweiter magnetischer Pol

## Patentansprüche

1. Gargeschirr mit einer Antriebseinheit (12a-d), die dazu vorgesehen ist, zumindest einen Verbraucher (14a-d) anzutreiben, und mit einer Empfangseinheit (16a-d), die zum kontaktlosen Empfang von Energie und zu einer Energieversorgung der Antriebseinheit (12a-d) vorgesehen ist, **dadurch gekennzeichnet, dass** die Antriebseinheit (12a-d) dazu vorgesehen ist, zu einem Antrieb des Verbrauchers (14a-d) zumindest ein Magnetfeld bereitzustellen.

2. Gargeschirr nach Anspruch 1, **dadurch gekennzeichnet, dass** die Empfangseinheit (16a-d) zumindest einen Induktor aufweist.

3. Gargeschirr nach einem der vorhergehenden Ansprüche, **dadurch gekennzeichnet, dass** die Antriebseinheit (12a-c) zumindest einen Elektromotor (18a-c) aufweist, der dazu vorgesehen ist, den Verbraucher (14a-c) anzutreiben.

4. Gargeschirr zumindest nach einem der vorhergehenden Ansprüche, **dadurch gekennzeichnet, dass** die Antriebseinheit (12c-d) dazu vorgesehen ist, zu dem Antrieb des Verbrauchers (14c-d) ein wenigstes im Wesentlichen um zumindest eine Drehachse (20c-d) rotierendes und in einen Lebensmittelaufnahmeraum (22c-d) wenigstens teilweise eingreifendes Magnetfeld bereitzustellen.

5. Gargeschirr nach einem der vorhergehenden Ansprüche, **gekennzeichnet durch** den Verbraucher (14a-d), welcher als Lebensmittelbearbeitungseinheit (24a-d) ausgebildet ist.

6. Gargeschirr nach Anspruch 4 und 5, **dadurch gekennzeichnet, dass** der Verbraucher (14c-d) zumindest ein Magnetelement (26c-d) aufweist, welches dazu vorgesehen ist, mit dem Magnetfeld zu wechselwirken.

7. Gargeschirr nach einem der vorhergehenden Ansprüche, **gekennzeichnet durch** eine Elektronikeinheit (28a-d), die dazu vorgesehen ist, Steuerbefehle von einer Kochfeld-Steuereinheit (30a-d) zu empfangen.

8. Gargeschirr nach einem der vorhergehenden Ansprüche, **gekennzeichnet durch** zumindest eine Gargeschirrgehäuseeinheit (32a-d), innerhalb welcher in wenigstens einem montierten Zustand zumindest die Empfangseinheit (16a-d) angeordnet ist.

9. Gargeschirr nach Anspruch 8, **dadurch gekennzeichnet, dass** die Gargeschirrgehäuseeinheit (32a-d) zumindest ein einem Lebensmittelaufnahmeraum (22a-d) abgewandtes Außengehäuseteil (34a-d) und zumindest ein dem Lebensmittelaufnahmeraum (22a-d) zugewandtes Innengehäuseteil (36a-d) aufweist, welche aus Materialien mit unterschiedlichen magnetischen Eigenschaften bestehen.

10. Gargeschirr nach Anspruch 9, **dadurch gekennzeichnet, dass** das Außengehäuseteil (34a-d) und das Innengehäuseteil (36a-d) zumindest einen Zwischenraum (38a-d) definieren, welcher wenigstens zu einem Großteil mit einem Isolationsmaterial gefüllt ist.

11. Kochsystem mit zumindest einem Gargeschirr (10a-d) nach einem der vorhergehenden Ansprüche und mit zumindest einer Kochfeldvorrichtung (42a-d), die zumindest eine Induktionseinheit (44a-d) aufweist, welche zumindest zu einer Bereitstellung von Energie für die Empfangseinheit (16a-d) des Gargeschirrs (10a-d) vorgesehen ist.

12. Kochsystem nach Anspruch 11, **dadurch gekennzeichnet, dass** die Induktionseinheit (44b) zumindest ein von einem Induktionsheizelement (46b) verschieden ausgebildetes Energieübertragungselement (48b) aufweist, das dazu vorgesehen ist, in wenigstens einem Betriebszustand die Energie für die Empfangseinheit (16b) bereitzustellen.

13. Kochsystem nach Anspruch 11, **dadurch gekennzeichnet, dass** die Induktionseinheit (44a) zumindest ein Induktionsheizelement (46a) aufweist, das dazu vorgesehen ist, in wenigstens einem Betriebszustand die Energie für die Empfangseinheit (16a) bereitzustellen.

## Claims

1. Cooking utensil with a drive unit (12a-d), which is provided to drive at least one consumer (14a-d), and with a receiving unit (16a-d), which is provided to receive energy in a contactless manner and to supply energy to the drive unit (12a-d), **characterised in that** the drive unit (12a-d) is provided to supply at least one magnetic field to drive the consumer (14a-d).

2. Cooking utensil according to claim 1, **characterised in that** the receiving unit (16a-d) has at least one inductor.

3. Cooking utensil according to one of the preceding claims, **characterised in that** the drive unit (12a-c) has at least one electric motor (18a-c), which is provided to drive the consumer (14a-c).

4. Cooking utensil at least according to one of the preceding claims, **characterised in that** the drive unit (12c-d) is provided to supply a magnetic field that rotates at least substantially about at least one rotation axis (20c-d) and engages at least partially in a food chamber (22c-d) to drive the consumer (14c-d).

5. Cooking utensil according to one of the preceding claims, **characterised by** the consumer (14a-d), which is configured as a food processing unit (24a-d).

6. Cooking utensil according to claims 4 and 5, **characterised in that** the consumer (14c-d) has at least one magnetic element (26c-d), which is provided to interact with the magnetic field.

7. Cooking utensil according to one of the preceding claims, **characterised by** an electronics unit (28a-d), which is provided to receive control commands from a hob control unit (30a-d).

8. Cooking utensil according to one of the preceding claims, **characterised by** at least one cooking utensil housing unit (32a-d), within which at least the receiving unit (16a-d) is arranged in at least one assembled state.

9. Cooking utensil according to claim 8, **characterised in that** the cooking utensil housing unit (32a-d) has at least one exterior housing part (34a-d) facing away from a food chamber (22a-d) and at least one interior housing part (36a-d) facing the food chamber (22a-d), these being made of materials with different magnetic properties.

10. Cooking utensil according to claim 9, **characterised in that** the exterior housing part (34a-d) and the interior housing part (36a-d) define at least one intermediate space (38a-d), which is at least largely filled with an insulating material.

11. Cooking system with at least one cooking utensil (10a-d) according to one of the preceding claims and with at least one hob apparatus (42a-d), which has at least one induction unit (44a-d), which is provided at least to supply energy for the receiving unit (16a-d) of the cooking utensil (10a-d).

12. Cooking system according to claim 11, **characterised in that** the induction unit (44b) has at least one energy transfer element (48b) that is configured differently from an induction heating element (46b) and is provided to supply the energy for the receiving unit (16b) in at least one operating state.

13. Cooking system according to claim 11, **characterised in that** the induction unit (44a) has at least one induction heating element (46a), which is provided to supply the energy for the receiving unit (16a) in at least one operating state.

## Revendications

1. Ustensile de cuisson, comprenant une unité d'entraînement (12a à d) qui est prévue pour entraîner au moins un consommateur (14a à d), et comprenant une unité de réception (16a à d) qui est prévue pour une réception sans contact d'énergie et pour une alimentation en énergie de l'unité d'entraînement (12a à d), **caractérisé en ce que** l'unité d'entraînement (12a à d) est prévue pour fournir au moins un champ magnétique à un entraînement du consommateur (14a à d).

2. Ustensile de cuisson selon la revendication 1, **caractérisé en ce que** l'unité de réception (16a à d) présente au moins un inducteur.

3. Ustensile de cuisson selon l'une quelconque des revendications précédentes, **caractérisé en ce que** l'unité d'entraînement (12a à c) présente au moins un moteur électrique (18a à c) qui est prévu pour entraîner le consommateur (14a à c).

4. Ustensile de cuisson selon l'une quelconque des revendications précédentes, **caractérisé en ce que** l'unité d'entraînement (12c à d) est prévue pour fournir un champ magnétique tournant au moins essentiellement autour d'au moins un axe de rotation (20c à d) et agissant au moins partiellement dans un espace de réception de denrées alimentaires (22c à d).

5. Ustensile de cuisson selon l'une quelconque des revendications précédentes, **caractérisé en ce que** le consommateur (14a à d) est réalisé sous la forme d'une unité de traitement de denrées alimentaires (24a à d).

6. Ustensile de cuisson selon la revendication 4 et 5, **caractérisé en ce que** le consommateur (14c à d) présente au moins un élément magnétique (26c à d) qui est prévu pour interagir avec le champ magnétique.

7. Ustensile de cuisson selon l'une quelconque des revendications précédentes, **caractérisé en ce qu'**une unité électronique (28a à d) est prévue pour recevoir des ordres de commande en provenance d'une unité de commande de champ de cuisson (30a à d).

8. Ustensile de cuisson selon l'une quelconque des revendications précédentes, **caractérisé par** au moins une unité formant enveloppe d'ustensile de cuisson (32a à d) à l'intérieur de laquelle au moins l'unité de réception (16a à d) est agencée dans au moins un état assemblé.

9. Ustensile de cuisson selon la revendication 8, **caractérisé en ce que** l'unité formant enveloppe d'ustensile de cuisson (32a à d) présente au moins une partie d'enveloppe extérieure (34a à d) détournée d'un espace de réception de denrées alimentaires (22a à d) et au moins une partie d'enveloppe intérieure (36a à d) tournée vers l'espace de réception de denrées alimentaires (22a à d), qui sont constituées de matériaux présentant des propriétés magnétiques différentes.

10. Ustensile de cuisson selon la revendication 9, **caractérisé en ce que** la partie d'enveloppe extérieure (34a à d) et la partie d'enveloppe intérieure (36a à d) définissent au moins un espace intermédiaire (38a à d) qui est rempli au moins en majeure partie d'un matériau isolant.

11. Système de cuisson, comprenant au moins un ustensile de cuisson (10a à d) selon l'une quelconque des revendications précédentes et comprenant au moins un dispositif de champ de cuisson (42a à d) qui présente au moins une unité d'induction (44a à d) prévue au moins pour une fourniture d'énergie à l'unité de réception (16a à d) de l'ustensile de cuisson (10a à d).

12. Système de cuisson selon la revendication 11, **caractérisé en ce que** l'unité d'induction (44b) présente au moins un élément de transfert d'énergie (48b) réalisé d'une manière différente de celle utilisée pour un élément de chauffage par induction (46b) et qui est prévu pour fournir l'énergie à l'unité de réception (16b) dans au moins un état de fonctionnement.

13. Système de cuisson selon la revendication 11, **caractérisé en ce que** l'unité d'induction (44a) présente au moins un élément de chauffage par induction (46a) qui est prévu pour fournir l'énergie à l'unité de réception (16a) dans au moins un état de fonctionnement.
